# EUROPEAN PATENT SPECIFICATION

(11) **EP 1 794 416 B1**
(45) Date of publication and mention of the grant of the patent: **13.12.2017**
(21) Application number: 04768565.6
(22) Date of filing: 21.09.2004
(51) Int. Cl.: F01D 17/16, F02C 6/12, F01D 5/14

(54) **VARIABLE NOZZLE TURBINE COMPRISING PRESSURE BALANCED VANES AND METHOD OF OPERATION**
TURBINE MIT VARIABLER GEOMETRIE MIT DRUCKAUSGEGLICHENEN SCHAUFELN SOWIE VERFAHREN ZUM BETRIEB
TURBINE À TUYÈRE VARIABLE COMPRENANT DES AUBES ÉQUILIBRÉES PAR LA PRESSION ET PROCÉDÉ D'OPERATION

(43) Date of publication of application: 13.06.2007
(73) Proprietor: Honeywell International Inc., Morris Plains, NJ 07950 (US)
(72) Inventor: SAUSSE, Lorrain, F-88450 Vincey (FR); BUTLER, David, I., Skelmersdale WN8 9PH (GB); DAVIES, Peter, F-88155 Vosges (FR)
(74) Representative: Freeman, Jacqueline Carol
(86) International application number: PCT/GB2004/004019
(87) International publication number: WO 2006/032827

(56) References cited:
- EP-A- 1 256 697
- WO-A-96/21094
- WO-A-2004/022926
- DE-C1- 19 959 017
- US-A- 3 542 484
- US-A- 4 300 869
- US-A- 4 502 836
- US-A- 6 050 775
- US-B1- 6 283 705
- US-B1- 6 461 105
- PATENT ABSTRACTS OF JAPAN vol. 012, no. 424 (M-761), 10 November 1988 (1988-11-10) & JP 63 159673 A (HITACHI LTD), 2 July 1988 (1988-07-02)

## Description

### TECHNICAL FIELD

Subject matter disclosed herein relates generally to methods, devices, systems, etc., for turbines and turbochargers and more specifically to variable geometry mechanisms associated with turbines and turbochargers.

### BACKGROUND

During operation of a variable nozzle turbine (VNT), a pressure differential can be generated between a command side and a vane body side of a variable geometry mechanism. Such a pressure differential can act on various vane components and force a vane component against another component, increase force between a vane and another component and/or increase force between vane components. Consequently, an increase in pressure differential can affect vane controllability. For example, a pressure differential can force a vane post against an opposing vane side surface (e.g., turbine casing shroud wall) and thereby increase friction force required to initiate vane rotation and/or friction force experienced during vane rotation. As discussed herein, a vane side surface is a surface that at least partially bounds or defines a space that includes a vane. In contrast, any particular vane may include a variety of surfaces such as lateral, upper, end, etc.

In the above example, the pressure differential stems in part from acceleration of exhaust gas through vane nozzles, which acts to decrease pressure on the vane side space of, for example, a nozzle ring of a variable geometry mechanism. In general, the pressure differential and magnitude of the problem grows as exhaust gas flow increases. Recent trends in turbocharger technology, including higher turbine inlet pressure, higher expansion ratio of vanes and larger vane axis diameters (e.g.,higher loading, potentially larger contact areas and therefore possibly more resistance), will tend to exacerbate such problems. Therefore, a need exists for technology that addresses pressure differential problems associated with variable geometry turbines.

US 6461105 describes a turbo machine which comprises a trunnion portion and an airfoil portion, the airfoil portion being defined by a leading edge, a trailing edge, and a pair of side edges. One or more of the side edges comprises a fin which extends from proximate to the trunnion portion toward the trailing edge of the airfoil portion. The fin tapers in thickness from the trunnion portion to the trailing edge portion. The fin may extend above and/or below the top and bottom surfaces of the airfoil and may be formed on a portion of one or both of the side edges. Document US3542484 discloses a variable vane ring for a turbine with an improved bearing for free rotation and US4502836 discloses a nozzle clamping force control for a variable primary nozzle in a radial flow turbine. The invention is defined by the claims.

### BRIEF DESCRIPTION OF THE DRAWINGS

A more complete understanding of the various exemplary methods, devices, systems, etc., described herein, and equivalents thereof, may be had by reference to the following detailed description when taken in conjunction with the accompanying drawings wherein:
Fig. 1 is a simplified approximate diagram illustrating a turbocharger with a variable geometry mechanism and an internal combustion engine.
Fig. 2 is an approximate perspective view of a turbine and vanes, which may be associated with a variable geometry mechanism.
Fig. 3 is a cross-sectional view of an exemplary variable geometry turbine that includes an exemplary insert and an exemplary vane.
Fig. 4A is a side view of an exemplary vane.
Fig. 4B is a top view of an exemplary vane.
Fig. 4C is a cross-sectional view of an exemplary vane.
Fig. 5 is a block diagram of an exemplary method for biasing one or more vanes to assist control of a variable geometry mechanism.

### DETAILED DESCRIPTION

Various exemplary devices, systems, methods, etc., disclosed herein address issues related to operation of a variable geometry turbine. For example, as described in more detail below, various exemplary devices, systems, methods, etc., address vane control. In particular, conventional problems associated with pressure differentials may be countered by creating other, for example, counterbalancing pressure differentials. The description presents a prior art turbocharger and a prior art vane arrangement followed by various exemplary devices, systems, methods, etc., that aim to address aforementioned problems and/or other problems.

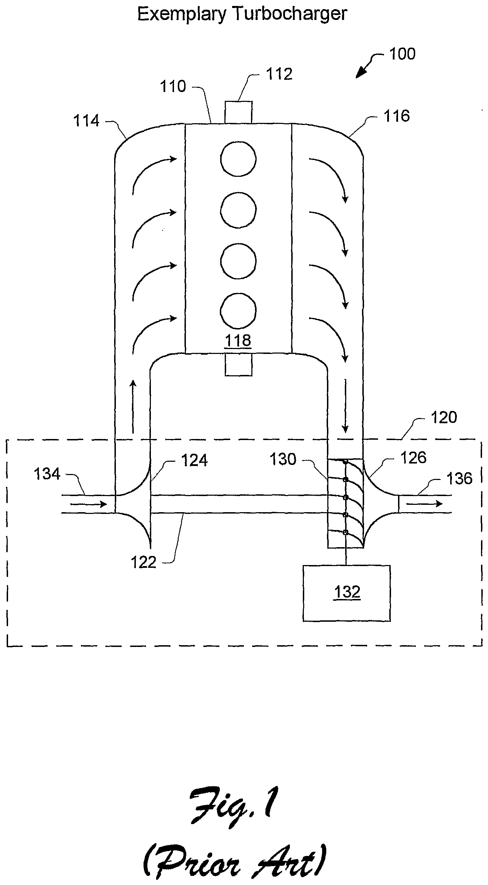

Turbochargers are frequently utilized to increase the output of an internal combustion engine. Referring to Fig. 1, an exemplary system 100, including an exemplary internal combustion engine 110 and an exemplary turbocharger 120, is shown. The internal combustion engine 110 includes an engine block 118 housing one or more combustion chambers that operatively drive a shaft 112. As shown in Fig. 1, an intake port 114 provides a flow path for air to the engine block while an exhaust port 116 provides a flow path for exhaust from the engine block 118.

The exemplary turbocharger 120 acts to extract energy from the exhaust and to provide energy to intake air, which may be combined with fuel to form combustion gas. As shown in Fig. 1, the turbocharger 120 includes an air inlet 134, a shaft 122, a compressor 124, a turbine 126, a variable geometry unit 130, a variable geometry controller 132 and an exhaust outlet 136. The variable geometry unit 130 optionally has features such as those associated with commercially available variable geometry turbochargers (VGTs), such as, but not limited to, the GARRETT® VTMT™ and AVNT™ turbochargers, which use multiple adjustable vanes to control the flow of exhaust across a turbine.

Adjustable vanes positioned at an inlet to a turbine typically operate to control flow of exhaust to the turbine. For example, GARRETT® VNT™ turbochargers adjust the exhaust flow at the inlet of a turbine in order to optimize turbine power with the required load. Movement of vanes towards a closed position typically directs exhaust flow more tangentially to the turbine, which, in turn, imparts more energy to the turbine and, consequently, increases compressor boost. Conversely, movement of vanes towards an open position typically directs exhaust flow in more radially to the turbine, which, in turn, reduces energy to the turbine and, consequently, decreases compressor boost. Thus, at low engine speed and small exhaust gas flow, a VGT turbocharger may increase turbine power and boost pressure; whereas, at full engine speed/load and high gas flow, a VGT turbocharger may help avoid turbocharger overspeed and help maintain a suitable or a required boost pressure.

A variety of control schemes exist for controlling geometry, for example, an actuator tied to compressor pressure may control geometry and/or an engine management system may control geometry using a vacuum actuator. Overall, a VGT may allow for boost pressure regulation which may effectively optimize power output, fuel efficiency, emissions, response, wear, etc. Of course, an exemplary turbocharger may employ wastegate technology as an alternative or in addition to aforementioned variable geometry technologies.

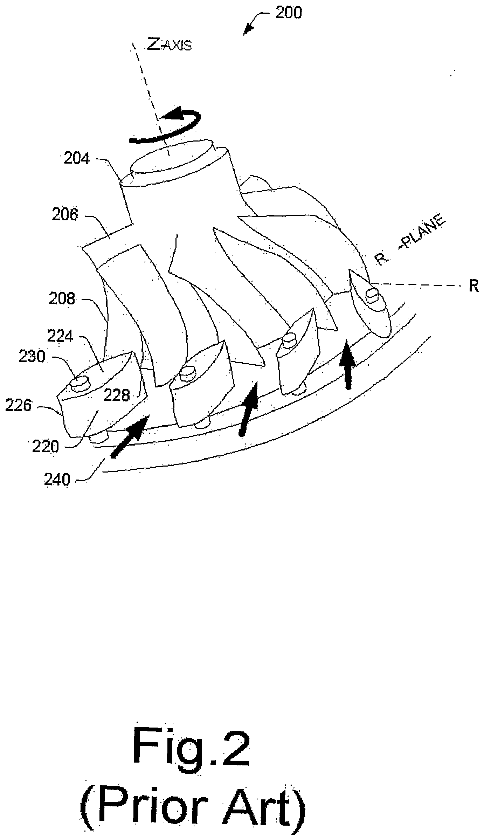

Fig. 2 shows an approximate perspective view a system 200 having a turbine wheel 204 and vanes 220 associated with a variable geometry mechanism. The turbine wheel 204 is configured for counter-clockwise rotation (at an angular velocity ω) about the z-axis. Of course, an exemplary system may include an exemplary turbine wheel that rotates clockwise. The turbine wheel 204 includes a plurality of blades 206 that extend primarily in a radial direction outward from the z-axis. Each of the blades 206 has an outer edge 208 wherein any point thereon can be defined in an r, Θ, z coordinate system (i.e., a cylindrical coordinate system).

In this example, the vanes 220 are positioned on axles or posts 230, which are set in a vane base 240, which may be part of a variable geometry mechanism. In this system, the individual posts 230 are aligned substantially parallel with the z-axis of the turbine wheel 204. Each individual vane 220 has an upper surface 224. While individual posts 230 are shown as extending beyond the upper surface 224, in other examples, the posts may be flush with the upper surface 224 or below the upper surface 224. With respect to adjustment of a vane, a variable geometry mechanism can provide for rotatable adjustment of a vane 220 to alter exhaust flow to the blades 206 of the turbine wheel 204. In general, an adjustment adjusts an entire vane and typically all of the vanes wherein adjustment of any vane also changes the shape of the flow space between adjacent vanes. Arrows indicate general direction of exhaust flow from a vane inlet end 226 to a vane outlet end 228. As mentioned above, adjustments toward "open" direct exhaust flow more radially to the turbine wheel 204; whereas, adjustments toward "closed" direct exhaust flow more tangentially to the turbine wheel 204.

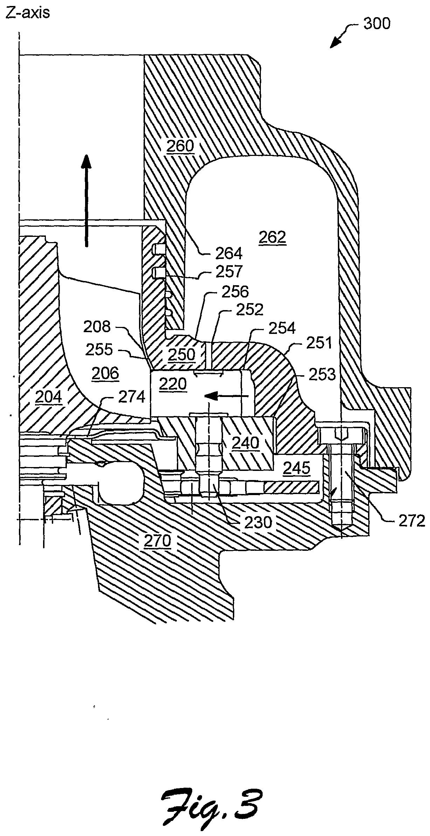

Fig. 3 shows a cross-sectional view of an exemplary variable geometry turbine 300. The turbine 300 may be part of a turbocharger assembly such as the turbocharger 120 of Fig. 1. The turbine 300 includes a turbine wheel 204 having an axis of rotation along the z-axis. The turbine wheel 204 includes one or more blades 206 wherein each blade has an outer edge 208. A vane 220 is positioned at a radius from the z-axis and is part of a variable geometry mechanism. The vane 220 includes a post 230 that passes through a vane base 240. In this example, the vane 220 includes a single post 230, which facilitates rotation of the vane 220. A command side space 245 may become pressurized by exhaust gas during operation. Flow velocity, indicated by arrows, can cause a decrease in pressure in a vane side space and thereby generate a pressure differential between the vane side space and the command side space 245. Again, such a pressure differential can act to apply force to the post 230, the vane 220 and/or other components. In a conventional variable geometry turbine, such force may inhibit control of various variable geometry components.

The turbine 300 includes an exemplary insert 250 that includes a vane side surface 254 and a volute side surface 256. Housing 260 includes a volute side surface 264 that, in combination with one or more other components (e.g., the insert 250) forms a volute 262 for flow of exhaust gas from one or more cylinders of an engine to, predominantly, the inlet side of nozzles formed, for example, by adjacent vanes. In this particular cross-section, an extension portion 251 of the exemplary insert 250 extends to meet a lower component 270 (e.g., a center housing, etc.). Other cross-sections lack such an extension portion to thereby provide for flow from the volute 262 to one or more vanes 220 (see, e.g., arrow for approximate direction of flow from volute 262).

In the cross-sectional view of Fig. 3, the exemplary insert 250 includes a passage 252. The passage 252 includes a first opening open to a volume defined in part by the volute side surface 256 of the insert 250 and a second opening that opens at the insert vane side surface 254 and substantially coincides with an upper surface of the vane 220 and/or with an upper end of the post 240. During operation of a variable geometry turbine, a passage such as the passage 252 can allow high pressure exhaust gas to bias a vane, a post and/or other components associated with a variable geometry mechanism. A one-to-one correspondence typically exists between passages 252 and vanes 220, i.e., each vane is associated with a passage.

In this particular example, the insert 250 includes vane side surface 254 that extends to or proximate to the outer edge 208 of the turbine wheel blade 206, in various other examples, an insert may have a surface that does not extend radially inward beyond a radial maximum of a turbine wheel blade. For example, an exemplary first insert may extend radially inward to a post of a vane and then meet with an exemplary second insert that when joined form a passage between an exhaust gas volute and a vane side space. In yet another example, an exemplary first insert extends just beyond a post of a vane and includes a passage between an exhaust gas volute and a vane side space while an exemplary second insert joins the first insert and extends at least partially adjacent to an outer edge of a turbine wheel blade.

The exemplary insert 250 typically includes a tubular portion that extends axially upward (i.e., in the direction of exhaust flow leaving the turbine) wherein the vane side surface 254 of the insert 250 transitions to a shroud surface 255 (e.g., adjacent a portion of blade edge 208) and the volute side surface 256 of the insert 250 transitions to a seal surface 257. In the example of Fig. 3, a clearance exists between a surface of the housing 260 and the seal surface 257, for example, of approximately 0.05 mm to approximately 0.15 mm. In general, the clearance is small enough to avoid significant gas leakage and large enough to provide appropriate mechanical decoupling between the housing 260 and the exemplary insert 250. As an additional sealing system to prevent gas leakage, the housing 260 and/or the exemplary insert 250 optionally include a recess capable of receiving a sealing element such as a ring (e.g., piston ring, etc.). Such a sealing system may damp turbulence of gas leaking from a volute 262 substantially defined by one or more surfaces of the housing 260 and the exemplary insert 250.

The exemplary insert 250 may form a kind of cartridge with various components of a variable geometry mechanism. Such components of a variable geometry mechanism may include the vane base 240 (e.g., a nozzle or unison ring) as well as other components. The exemplary insert 250 may include a leg step portion or surface 253 that acts to receive and clamp the vane base 240 against another component such as an annular disc member 274 supported on the lower component 270 (e.g., a center housing, etc.). In the example of Fig. 3, an attachment mechanism 272 allows for attachment of the exemplary insert 250 to the lower component 270; the exemplary insert 250 and the lower component 270 thereby form a kind of stable shell for protecting movable elements of the variable geometry mechanism. A plurality of attachment mechanisms 272 (e.g., bolts, etc.) optionally serve as the only mechanisms for coupling the variable nozzle unit (e.g., vane base, vanes, etc.) to the lower component 270.

The exemplary insert 250 may allow for mechanical and/or thermal decoupling of the exhaust housing 260 and variable geometry components. In turn, the variable geometry components may experience less deformation, sticking or binding of vanes, failure, etc. Again, in the example of Fig. 3, the exhaust housing 260 couples to the lower component 270 without contacting the exemplary insert 250, for example, a clearance exists between the extension 251 and the housing 260 (see the ., region proximate to the attachment mechanism 272) and a clearance exists between the tubular portion surface 257 and the housing 260 (e.g., optionally spaced with a ring). As such, in this example, the exemplary insert 250 does not contact, or is in very limited contact with, the exhaust housing 260. In another example, some contact may occur between the housing 260 and an outer portion of the extension 251 of the insert 250. In this latter example, the housing 260 may include a leg step or other feature that acts to clamp the insert 250 and an attachment mechanism(s) for the housing 260 and the lower component 270 may act to secure the insert 250 in conjunction with such clamping. In yet another example, the lower component 270 includes an inner recess at the periphery for engagement of an extension of an exemplary insert, which may alleviate the need for the attachment mechanism 272.

While an insert is described, a body may act to define one or more passages. Such a body is optionally a component of a turbine, such as, a turbine housing body, etc.

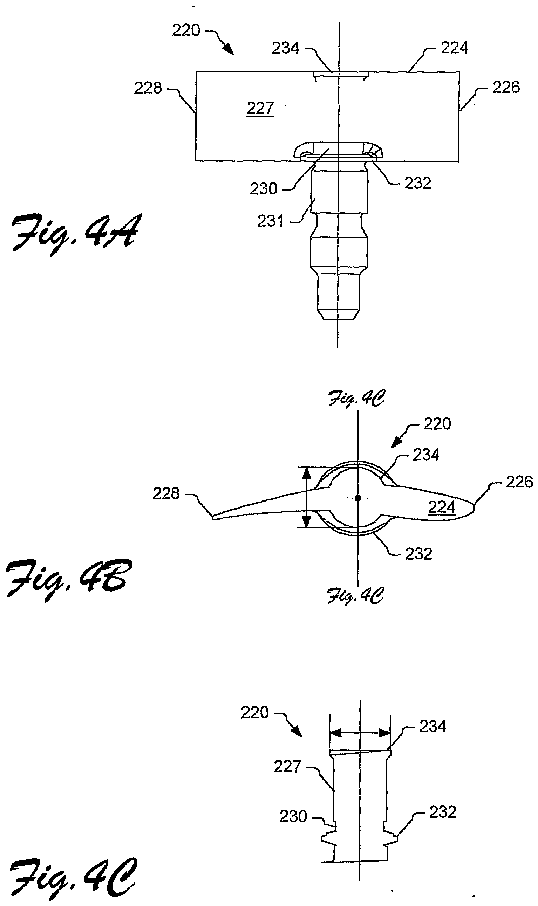

Figs. 4A, 4B and 4C show a side view, a top view and a cross-sectional view, respectively, of an exemplary vane 220. The vane 220 includes an inlet side or leading edge 226, an outlet side or trailing edge 228, a lateral surface 227 (a pressure surface or a suction surface), an upper surface 224 and an associated post 230, which is optionally integral with the exemplary vane 220. The post 230 includes an extension that extends downward to engage a vane control mechanism to pivot the vane about a pivot axis (dashed line in Figs. 4A and 4C). The vane 220 also includes an outwardly flared base portion 232, which has a radial dimension greater than the post 230 and an outwardly flared upper portion 234, which may have a radial dimension greater than a radial dimension of the post 230. The flared upper portion 234 enlarges area of the upper surface 224 of the vane 220 in a region that substantially coincides with a passage that can provide high pressure exhaust gas. The flared upper portion 234 is optionally concave (dashed line) or otherwise shaped to help stabilize the vane 220.

As shown in Figs. 4A, 4B and 4C, the exemplary vane 220 includes a pivot axis, a leading edge and a trailing edge, a lateral pressure surface and a lateral suction surface that meet at the leading edge and at the trailing edge and an upper surface that includes an outwardly flared pressure biasing region substantially coincident with the pivot axis. A radius about the pivot axis may substantially define the boundary of the outwardly flared pressure biasing region.

In one example, the passage 252 of Fig. 3 provides high pressure exhaust gas during operation of the turbine 300. In general, gas flows from a high pressure to a low pressure; thus, some exhaust may flow via the passage 252 from the exhaust gas volute 262 to the vane side space. To prevent excessive flow via the passage 252, the exemplary vane 220 includes an enlarged upper surface that substantially coincides with the turbine side opening of the passage 252. Thus, during turbine operation, a point at which air flow is relatively stagnant, a "stagnation point," may exist on the upper surface 224 of the exemplary vane. Various exemplary vanes optionally include an upper surface region wherein the region has an intended stagnation point.

A stagnation point, i.e. a point at which air flow is substantially decreased or potentially stopped, generally occurs whenever a flow impinges on a solid object. Further, pressure is typically at a maximum at the stagnation point. Therefore, an exemplary vane optionally includes an upper surface with a region designed to have a stagnation point when subjected to flow substantially normal to the region. Such an exemplary region may be substantially disk-shaped and defined by one or more radii. For example, an exemplary upper surface region of an exemplary vane may include an enlarged pressure biasing region defined by a radius. In general, the radius of the pressure biasing region is greater than the greatest cross sectional dimension of an exemplary passage opening. For example, a passage opening may have a substantially circular cross-section of radius r_{P} while a pressure biasing region may have a radius r_{B}, wherein r_{B} > r_{P}. Depending on alignment of the passage and the region, in this example, a stagnation point may exist at or near the center of the pressure biasing region.

As the size of a pressure biasing region increases with respect to passage opening size, consequences and/or risk of misalignment may be reduced. In addition, an increase in the size of a pressure biasing region may act to reduce consequences of movement and/or position of variable geometry turbine components.

While the upper surface 224 of the exemplary vane 220 may be substantially planar, various other exemplary vanes may include a concavity that acts to increase biasing forces provided by exhaust gas via an exemplary insert passage. In general, forces are minimized on a surface when the surface is convex with respect to a predominant direction of flow (e.g., consider a nose cone of an aircraft). A concavity may act to further define an intended stagnation point.

In general, exhaust gas pressure acts to stabilize and/or bias a vane and/or associated components. Such exemplary devices can counterbalances effects of a "static" pressure differential that exists between a vane side and a command side of a nozzle ring, which tends to push vanes towards one or more vane end fronting surfaces positioned adjacent to an axle end of each respective vane.

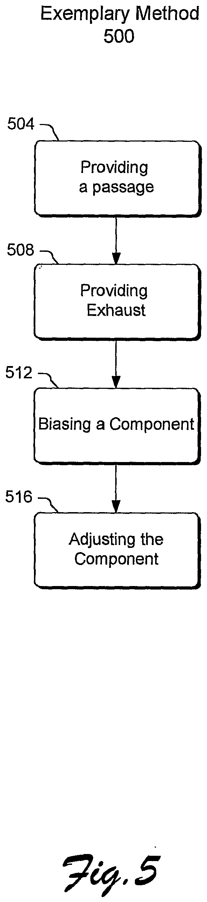

Fig. 5 shows a block diagram of an exemplary method 500 for facilitating control of one or more vanes and/or other components of a variable geometry mechanism. A providing block 504 includes providing a passage that connects an exhaust gas space with a vane side space. Another providing block 508 includes providing exhaust gas to the exhaust gas space in a manner that creates a pressure differential between the exhaust gas space and the vane side space wherein the exhaust gas space pressure exceeds the vane side space pressure. A biasing block 512 coincides with the providing block 508 wherein the pressure differential acts to bias one or more vanes of a variable geometry mechanism. An adjustment block 516 may operate in a more efficient manner given the biasing of the biasing block 512. For example, the adjustment block 516 may act with less force, with more accuracy, with less wear, with greater efficiency, etc., due at least in part to the biasing 512.

## Claims

1. A variable geometry turbine assembly (300) of a turbocharger comprising a body that defines passages (252) and vanes (220) wherein each of the vanes (220) comprises: a pivot axis; a leading edge (226) and a trailing edge (228); a lateral pressure surface (227) and a lateral suction surface (227) that meet at the leading edge (226) and at the trailing edge (228); an upper surface (224) extending from the trailing edge (228) to the leading edge (226) and adjacent the lateral pressure surface (227) and the lateral suction surface (227); and a lower surface, opposite the upper surface (224), from which lower surface extends a pivot post (231), corresponding with the pivot axis;
**characterized in that**,
the upper surface (224) comprises an outwardly flared pressure biasing region (234), the biasing region being coincident with the pivot axis and substantially aligned with one of the passages.

2. The variable geometry turbine assembly of claim 1 wherein each of the vanes comprises a radius about the pivot axis that substantially defines an outer boundary of the outwardly flared pressure biasing region.

3. The variable geometry turbine assembly of claim 1 or 2 wherein the upper surface comprises a concavity.

4. The variable geometry turbine assembly of claim 1, 2 or 3 wherein the outwardly flared pressure biasing region comprises a concavity.

5. The variable geometry turbine assembly of claim 1 wherein the body comprises a vane side surface (254) that defines a portion of a vane space in the turbine assembly and an opposing exhaust volute side surface (256) adjacent an exhaust volute (262) in the turbine assembly wherein the passages (252) are between the exhaust volute side surface (256) and the vane side surface (254) and allow for passage of exhaust from the exhaust volute (262) to the vane side space and wherein for each of the vanes (220), the outwardly flared pressure biasing region (234) of the upper surface (224) is substantially aligned with a corresponding one of the passages (252) defined by the body.

6. The variable geometry turbine assembly of claim 5 wherein the body comprises an insert (250).

7. The variable geometry turbine assembly of claim 1 comprising means for biasing each of the vanes (220) wherein the vanes comprise single post vanes and wherein the means for biasing biases the vanes along a post pivot axis of each of the vanes by high pressure exhaust gas provided from an exhaust volute (262) wherein the means for biasing comprises the passages (252) wherein each of the passages transmits high pressure exhaust gas to form a stagnation point on the biasing region (234) of the upper surface (224) of a corresponding one of the vanes (220).

8. The variable geometry turbine assembly of claim 1 comprising:
a vane base (240) that defines pivot axes for the vanes (220);
wherein the body comprises an insert (250) that comprises a vane side surface (253) adjacent a vane side space that extends outward to a surface capable of receiving the vane base and that comprises an exhaust volute side surface (256) adjacent an exhaust volute (262); and
wherein the passages (252) allow for passage of exhaust from the exhaust volute (262) to the vane side space wherein each of the passages (252) includes an opening on the vane side surface (253) and an opening on the exhaust volute side surface (256);
wherein the insert (250) attaches to a center housing (270) of a turbocharger via one or more attachment mechanisms;
wherein an annular disc member (274) and the insert (250) act to clamp the vane base (240);
wherein the openings on the vane side surface (254) coincide with the pivot axes defined by the vane base (240); and
wherein the insert (250) optionally attaches to the center housing (270) without directly contacting an exhaust housing (260).

9. A method (500) to facilitate control of a variable geometry mechanism of a turbocharger comprising:
providing passages between an exhaust volute and a vane space (504);
providing high pressure exhaust to the exhaust volute (508);
biasing a plurality of vanes by allowing the high pressure exhaust to flow through the passages wherein each vane comprises a pivot axis and an upper surface that comprises an outwardly flared pressure biasing region, the biasing region being coincident with the pivot axis and wherein each passage directs exhaust to the biasing region of a corresponding one of the vanes (512); and
adjusting the vanes (516).

10. The method of claim 9, wherein each passage includes an opening on a surface of the exhaust volute and an opening on a surface of the vane side space and wherein the surface of the vane side space and the surface of the exhaust volute are associated with an insert.

## Patentansprüche

1. Turbinenbaugruppe (300) mit variabler Geometrie eines Turboladers, aufweisend einen Körper, welcher Kanäle (252) definiert, und Schaufeln (220), wobei jede Schaufel (220) eine Drehachse; eine Vorderkante (226) und eine Hinterkante (228); eine seitliche Druckfläche (227) und eine seitliche Unterdruckfläche (227), welche sich an der Vorderkante (226) und Hinterkante (228) treffen; eine obere Fläche (224), welche sich von der Hinterkante (228) zu der Vorderkante (226) erstreckt und an die seitliche Druckfläche (227) und die seitliche Unterdruckfläche (227) angrenzt; und eine untere, der oberen Fläche (224) gegenüber liegende Fläche aufweist, aus welcher unteren Fläche sich ein Drehzapfen (231) erstreckt, welcher mit der Drehachse übereinstimmt;
**dadurch gekennzeichnet, dass**
die obere Fläche (224) einen nach außen aufgeweiteten, Druck vorbelastenden Bereich (234) aufweist, wobei der vorbelastende Bereich mit der Drehachse zusammenfällt und im Wesentlichen mit einem der Kanäle ausgerichtet ist.

2. Turbinenbaugruppe mit variabler Geometrie nach Anspruch 1, wobei jede Schaufel einen Radius um die Drehachse aufweist, welcher im Wesentlichen eine äußere Grenze des nach außen aufgeweiteten, Druck vorbelastenden Bereichs definiert.

3. Turbinenbaugruppe mit variabler Geometrie nach Anspruch 1 oder 2, wobei die obere Fläche eine Konkavität aufweist.

4. Turbinenbaugruppe mit variabler Geometrie nach Anspruch 1, 2 oder 3, wobei der nach außen aufgeweitete, Druck vorbelastende Bereich eine Konkavität aufweist.

5. Turbinenbaugruppe mit variabler Geometrie nach Anspruch 1, wobei der Körper eine schaufelseitige Fläche (254), welche einen Abschnitt eines Schaufelraums in der Turbinenbaugruppe definiert, und eine gegenüber liegende auspuffspiralseitige Fläche (256) aufweist, welche an eine Auspuffspirale (262) in der Turbinenbaugruppe angrenzt, wobei die Kanäle (252) sich zwischen der auspuffspiralseitigen Fläche (256) und der schaufelseitigen Fläche (254) befinden und den Durchfluss von Abgas von der Abgasspirale (262) zu dem schaufelseitigen Raum ermöglichen und wobei für jede Schaufel (220) der nach außen aufgeweitete, Druck vorbelastende Bereich (234) der oberen Fläche (224) im Wesentlichen mit einem entsprechenden der durch den Körper definierten Kanäle (252) ausgerichtet ist.

6. Turbinenbaugruppe mit variabler Geometrie nach Anspruch 5, wobei der Körper einen Einsatz (250) aufweist.

7. Turbinenbaugruppe mit variabler Geometrie nach Anspruch 1, aufweisend Mittel zum Vorbelasten jeder Schaufel (220), wobei die Schaufeln Schaufeln an einzelnen Stellen aufweisen und wobei die Mittel zum Vorbelasten die Schaufeln entlang einer Drehachse der Stelle von jeder Schaufel vorbelasten, indem Auspuffgas mit hohem Druck von einer Abgasspirale (262) zugeführt wird, wobei die Mittel zum Vorbelasten die Kanäle (252) aufweisen, wobei jeder Kanal Abgas mit hohem Druck weiterleitet, um einen Staupunkt auf dem vorbelastenden Bereich (234) der oberen Fläche (224) einer entsprechenden Schaufel (220) zu bilden.

8. Turbinenbaugruppe mit variabler Geometrie nach Anspruch 1, aufweisend:
eine Schaufelbasis (240), welche Drehachsen für die Schaufeln (220) definiert;
wobei der Körper einen Einsatz (250) aufweist, welcher eine schaufelseitige Fläche (253) aufweist, welche an einen schaufelseitigen Raum angrenzt, der sich nach außen zu einer Fläche erstreckt, welche in der Lage ist, die Schaufelbasis aufzunehmen, und welcher eine auspuffspiralseitige Fläche (256) aufweist, welche an eine Auspuffspirale (262) angrenzt; und
wobei die Kanäle (252) Durchfluss von Abgas von der Auspuffspirale (262) zu dem schaufelseitigen Raum ermöglichen, wobei jeder Kanal (252) eine Öffnung an der schaufelseitigen Fläche (253) und eine Öffnung an der auspuffspiralseitigen Fläche (256) umfasst;
wobei der Einsatz (250) an einem Zentralgehäuse (270) eines Turboladers über ein oder mehrere Befestigungsmechanismen befestigt ist;
wobei ein ringförmiges Scheibenelement (274) und der Einsatz (250) einwirken, um die Schaufelbasis (240) einzuspannen;
wobei die Öffnungen an der schaufelseitigen Fläche (254) mit den von der Schaufelbasis (240) definierten Drehachsen zusammenfallen; und
wobei der Einsatz (250) optional an dem Zentralgehäuse (270) befestigt ist, ohne mit einem Auspuffgehäuse (260) direkt in Kontakt zu kommen.

9. Verfahren (500), um die Steuerung eines Mechanismus von variabler Geometrie eines Turboladers zu erleichtern, aufweisend:
Bereitstellen von Kanälen zwischen einer Auspuffspirale und einem Schaufelraum (504);
Zuführen von Abgas unter hohem Druck zu der Auspuffspirale (508);
Vorbelasten einer Vielzahl von Schaufeln, indem es dem Abgas unter hohem Druck ermöglicht wird, durch die Kanäle zu strömen, wobei jede Schaufel eine Drehachse und eine obere Fläche aufweist, welche einen nach außen aufgeweiteten, Druck vorbelastenden Bereich aufweist, wobei der vorbelastende Bereich mit der Drehachse zusammenfällt und wobei jeder Kanal Abgas auf den vorbelastenden Bereich einer entsprechenden Schaufel (512) richtet; und
Einstellen der Schaufeln (516).

10. Verfahren nach Anspruch 9, wobei jeder Kanal eine Öffnung auf einer Fläche der Auspuffspirale und eine Öffnung auf einer Fläche des schaufelseitigen Raums umfasst, und wobei die Fläche des schaufelseitigen Raums und die Fläche der Auspuffspirale mit einem Einsatz verknüpft sind.

## Revendications

1. Ensemble turbine (300) à géométrie variable d'un turbocompresseur comprenant un corps qui définit des passages (252) et des ailettes (220), dans lequel chacune des ailettes (220) comprend : un axe de pivot ; un bord d'attaque (226) et un bord de fuite (228) ; une surface latérale (227) de pression et une surface latérale (227) d'aspiration qui se rencontrent au niveau du bord d'attaque (226) et du bord de fuite (228) ; une surface supérieure (224) s'étendant du bord de fuite (228) au bord d'attaque (226) et adjacente à la surface latérale (227) de pression et à la surface latérale (227) d'aspiration ; et une surface inférieure, à l'opposé de la surface supérieure (224), surface inférieure depuis laquelle s'étend un tenon (231) de pivot, correspondant à l'axe de pivot,
**caractérisé en ce que** la surface supérieure (224) comprend une zone (234) de sollicitation de la pression, évasée vers l'extérieur, la zone de sollicitation étant confondue avec l'axe de pivot et sensiblement alignée avec un des passages.

2. Ensemble turbine à géométrie variable selon la revendication 1, dans lequel chacune des ailettes comprend un rayon autour de l'axe de pivot qui définit sensiblement une limite extérieure de la zone de sollicitation de la pression, évasée vers l'extérieur.

3. Ensemble turbine à géométrie variable selon la revendication 1 ou 2, dans lequel la surface supérieure comprend une concavité.

4. Ensemble turbine à géométrie variable selon l'une quelconque des revendications 1, 2 ou 3, dans lequel la zone de sollicitation de la pression, évasée vers l'extérieur comprend une concavité.

5. Ensemble turbine à géométrie variable selon la revendication 1, dans lequel le corps comprend une surface latérale (254) d'ailette qui délimite une partie d'un espace ailettes dans l'ensemble turbine et en face une surface latérale (256) de volute d'échappement adjacente à une volute (262) d'échappement dans l'ensemble turbine dans lequel les passages (252) sont situés entre la surface latérale (256) de volute d'échappement et la surface latérale (254) d'ailette et permettre à des gaz d'échappement de passer de la volute (262) d'échappement à l'espace latéral d'ailettes et dans lequel, pour chacune des ailettes (220), la zone (234) de sollicitation de la pression, évasée vers l'extérieur, de la surface supérieure (224) est sensiblement alignée avec l'un des passages (252) correspondants délimités par le corps.

6. Ensemble turbine à géométrie variable selon la revendication 5, dans lequel le corps comprend un insert (250).

7. Ensemble turbine à géométrie variable selon la revendication 1, comprenant un moyen pour solliciter chacune des ailettes (220), dans lequel les ailettes sont des ailettes à simple tenon et dans lequel le moyen de sollicitation sollicite les ailettes selon l'axe de pivot de tenon de chacune des ailettes par le gaz d'échappement haute pression provenant de la volute (262) d'échappement, dans lequel le moyen de sollicitation comprend les passages (252), dans lequel chacun des passages transmet du gaz d'échappement haute pression pour constituer un point de stagnation sur la zone (234) de sollicitation de la surface supérieure (224) d'une des ailettes (220) correspondante.

8. Ensemble turbine à géométrie variable selon la revendication 1, comprenant une base (240) d'ailette qui définit des axes de pivot pour les ailettes (220),
dans lequel le corps comprend un insert (250) qui comprend une surface latérale (253) d'ailette adjacente à un espace latéral d'ailettes qui s'étend vers l'extérieur jusqu'à une surface capable de recevoir la base d'ailette et qui comprend une surface latérale (256) de volute d'échappement adjacente à une volute (262) d'échappement ; et
dans lequel les passages (252) permettent à des gaz d'échappement de passer de la volute (262) d'échappement à l'espace latéral d'ailettes, dans lequel chacun des passages (252) comprend une ouverture sur la surface latérale (253) d'ailette et une ouverture sur la surface latérale (256) de volute d'échappement ;
dans lequel l'insert (250) se fixe à un logement central (270) d'un turbocompresseur, via un ou plusieurs mécanismes de fixation ;
dans lequel un élément (274) de disque annulaire et l'insert (250) agissent pour claveter la base (240) d'ailette ;
dans lequel les ouvertures sur la surface latérale (254) d'ailette coïncident avec les axes de pivot définis par la base (240) d'ailette ; et
dans lequel l'insert (250) se fixe éventuellement au logement central (270) sans contact direct avec un carter (260) d'échappement.

9. Procédé (500) pour commander plus facilement le mécanisme à géométrie variable d'un turbocompresseur, comprenant les opérations consistant à :
assurer des passages entre une volute d'échappement et un espace d'ailettes (504) ;
fournir du gaz d'échappement haute pression à la volute d'échappement (508) ;
solliciter une pluralité d'ailettes en permettant au gaz d'échappement haute pression de circuler à travers les passages, chaque ailette comprenant un axe de pivot et une surface supérieure qui comprend une zone de sollicitation de la pression, évasée vers l'extérieur, la zone de sollicitation étant confondue avec l'axe de pivot et dans lequel chaque passage dirige le gaz d'échappement vers la zone de sollicitation d'une des ailettes correspondante (512) ; et
régler les ailettes (516).

10. Procédé selon la revendication 9, dans lequel chaque passage comprend une ouverture sur la surface de la volute d'échappement et une ouverture sur la surface de l'espace latéral d'ailettes et dans lequel la surface de l'espace latéral d'ailettes et la surface de la volute d'échappement sont associées à un insert.
